# EUROPEAN PATENT APPLICATION

(11) **EP 1 834 522 A2**
(43) Date of publication of application: **19.09.2007**
(21) Application number: 07104051.3
(22) Date of filing: 13.03.2007
(51) Int. Cl.: A01K 1/00

(54) **Method to reduce odour and dust inside buildings**

(30) Priority: 13.03.2006 DK 200600351
(71) Applicant: Rotor A/S Ventilation & Foderanlaeg, 6800 Varde (DK)
(72) Inventor: Søberg, Kristian, 8462, Harlev J (DK)
(74) Representative: Tellefsen, Jens J.

(57) **Abstract**

The present invention describes a method to reduce odour and dust inside buildings, and in particular animal stables, where the method comprises installing one or more nozzles inside the building, and connecting said nozzle to a pressure source such that a liquid containing water and lactic acid bacteria may be ejected as a mist into said building.

## Description

### Field of the Invention

The present invention describes a method to reduce odour and dust inside buildings, and in particular animal stables.

### Background of the Invention

It is well-known that the odour (stink) from farms and in particular farms where animals are kept can be very undesirable and unpleasant. The smell arises due to the manure produced by the animals. The manure is both present inside the stables where the animals are kept, but the manure is also stored usually outside in order to reuse the nutritious components of the manure as fertilizer in the fields.

The main component generating the unpleasant smell is ammonia. But apart from ammonia, the smell comprises a rather complex combination of more than two hundred different components which each has a particular odour. It has, however, been determined that the odour arising from ammonia is the dominant factor, and by far the determining factor which gives rise to the unpleasant odour from farms with animal stables.

Although the manure, and in particular the ammonia, is an unpleasant subject matter, it is a very valuable and important asset in that the fertilizer value of manure is relatively high. For these purposes, it is interesting to reuse the manure. In Denmark and other northern countries, there are limited times when it is allowed to spread the manure on the fields due to the fact that the environment shall be capable of assimilate the nutrients and thereby avoid being washed out to the aquatic environment. Therefore the manure must be stored at the farm until such time that it is allowed to spread the manure.

Inside the stables where the animals live, the animals must also endure the smell of the manure. Furthermore, people working inside the stables are also exposed to the very unpleasant smells arising from the manure produced by the animals.

A further problem is the generation of dust which arises due to the presence of straw, and in some instances also the type of feed the animals are being fed. The dust suspended in the air may give rise to respiratory problems, and in particular for people or animals exposed to asthma, it can be a very unpleasant experience to enter a stable environment.

### Object of the Invention

For these and other reasons, it is desirable to limit the unpleasant odour as well as the dust, particularly inside stable environments.

The present invention addresses this problem by providing a method to reduce odour and dust inside buildings, and in particular animal stables, where the method comprises installing one or more nozzles inside the building, and connecting said nozzle to a pressure source such that a liquid containing water and lactic acid bacteria may be ejected as a mist into said building.

### Description of the Invention

The generated mist solves the above mentioned problems by two different approaches. As the liquid is transformed to a mist through the nozzles, the tiny droplets making up the mist will encounter dust in the air. By this encounter, the droplets will adhere to the surface of the dust particles such that the dust/liquid, due to the influence of gravity, will fall to the floor of the stable. In this manner, the tiny droplets of the mist will encounter a substantial of the dust particles in the air, and as explained above, due to the influence of gravity will clean the air from dust.

Secondly, the lactic acid bacteria will feed on the manure, whether it be the liquid or the solid fraction of the manure, and in particular the lactic acid bacteria will transform free ammonia to ammonium bound to other materials such that the amount of free ammonia inside the building which will otherwise evaporate will be substantially reduced, and consequently the odour impact from the ammonia will be seriously reduced.

In a further advantageous embodiment of the invention, the one or more nozzles are arranged in or adjacent the inflow channels of a ventilation system, whereby the mist is distributed inside the building with the ventilation air. In this manner, the liquid and in particular the lactic acid bacteria may be thoroughly mixed with the ventilation air, and also thoroughly distributed to the inside space of the building.

In a further advantageous embodiment of the invention, a slotted floor construction is present inside the building such that the slotted floor allows the water and lactic acid bacteria to flow through the slots and into manure present under the slotted floor.
In many stable buildings, the floor where the animals are kept comprises a large number of slots. The slots are provided in order for the manure to be able to pass through the floor and be collected and transported out of the stable building from a space below the surface of the floor on which the animals are living. By having a slotted floor, the liquid and thereby also the water and the lactic acid bacteria will be able to enter this space between the floor on which the animals live and the bottom of this manure channel. As this is the place where the manure is present in large concentrations and has the largest influence on the odour present inside the building, it is advantageous to allow the bacteria to enter this space. Therefore, by first creating a mist inside the interior space of the building, the dust particles and odour particles in the air is cleaned, and afterward the particles will due to influence of gravity fall down. A substantial amount of dust and bacteria will be collected in the space below the floor such that further limitation of the odour impact may be provided, substantially by reducing the evaporation of ammonia and other odour components.

In a still further advantageous embodiment of the invention, the pressure source is connected to a timer device such that the liquid may be supplied to the nozzles during predetermined time periods and durations. The time sequences may be chosen at random. Advantageously, mist is generated for between 30 seconds and 15 minutes separated by 20 to 90 minutes without mist generation. More preferred, mist is generated between 1 minute and 8 minutes separated by 30 to 45 minutes. The time periods, both when mist is generated and the time period between the generation of mist, must be adjusted according to the size of the animals in the stable, the season of the year, how many animals are present, and the general layout of the interior of the building.

Also, depending on the animals, the feed and the season, the lactic acid bacteria content which is added to the liquid as a suspension may vary between 0.05 % and 30 % , more preferred 1% to 20 % and most preferred 10 % to 17 % by weight of the liquid in order to be able to counter the impact from malodours.

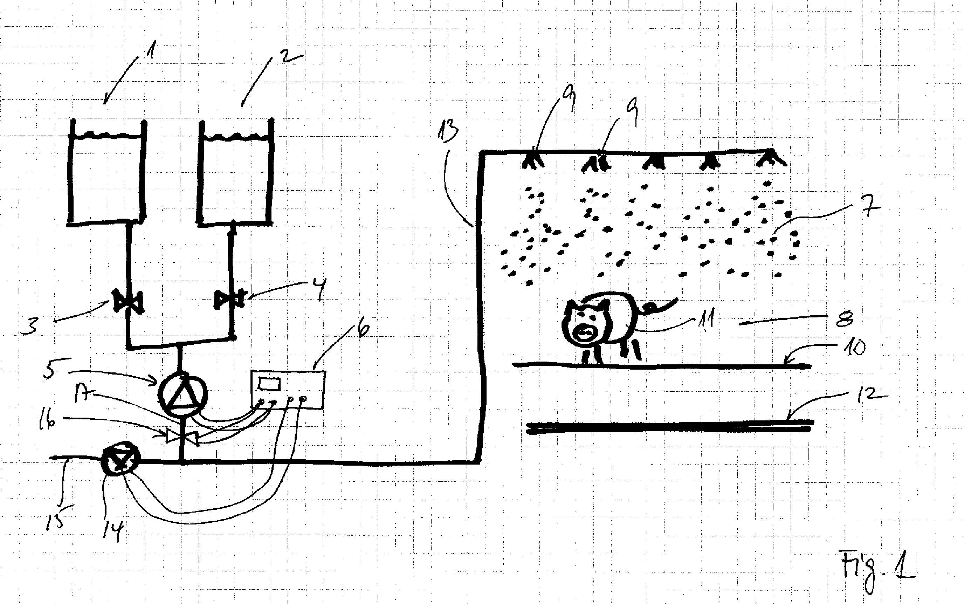

The invention will now be explained with reference to the drawings wherein figure 1 illustrates a simplified diagram of an installation according to the invention. In two tanks, 1 and 2, the liquid which will be generated as a mist in the stable is prepared.

In the first tank 1, approximately 200 litres of water is mixed with 10 to 15 % by volume of lactic acid bacteria. Lactic acid bacteria are commercially available under the trade name Terrabiosa from the Danish company Biosa Danmark ApS.

This mixture in tank 1 is left to ferment for about five days where the liquid is kept at a temperature of 37 to 38 degrees Celsius. During this period, the lactic acid bacteria will multiply and create approximately 200 litres of liquid having an extremely high content of lactic acid bacteria. After the 5 days at elevated temperature, the mixture in tank 1 is kept for 1 to 2 days at the ambient temperature in order to acclimatize the bacteria to the environment inside the stables.

When the batch in tank 1 is ready for use, a similar procedure is carried out in tank 2 in that in the illustrated example the volume of 200 litres is approximately sufficient in order to counter the impact from malodours in a stable containing approximately 1,200 pigs for a week. In this connection, it should be mentioned that various physical conditions relating to the size of the stables, the ventilation, the time of year, the size of the pigs, etc. has an influence on the amount of mixture used.

When the mixture in tank 1 is ready for use the valve 3 is opened and the valve 4 closed such that the liquid in tank 1 is led to the pump 5.

The pump 5 is controlled by a control unit illustrated by the box 6. This box may regulate the activation of the pump such that mixture is pumped into the stable at intervals, the length of the intervals where pre-programmed parameters may be stored in the control unit 6 where the pre-programmed parameters may relate to the temperature in the stable, the amount of pigs present, the ventilation speed, the ambient temperature, etc. and etc.

Once the pump is activated, a mist 7 of lactic acid bacteria containing liquid will be generated in the stable area illustrated at 8. The mist is generated by nozzles 9 which may be arranged at suitable places inside the stable, for example directly above each pigsty or in or adjacent the ventilation intake openings such that an optimum distribution of the mist 7 may be achieved in relation to the pigs 11 present in the stable.

In the pig sties, the floor may advantageously be a slotted floor such that the mist 7 may gain access to the manure in the inter space between the slotted floor 10 and the bottom of the manure trench 12. In this manner, a double action is achieved by the lactic acid bacteria in that the mist will reduce the malodours directly in the air, and when the mist sinks through the slotted floor 10 and comes into contact with manure present in the inter space between the slotted floor 10 and the bottom of the manure trench 12 it will neutralize the odours emanating from the manure.

A further added advantage of creating a mist is the fact that the liquid droplets in the mist will connect with dust particles, and thereby reduce the amount of airborne dust in the stable environment.

The pump 5 may advantageously provide a pressure of approximately 130 bars in the pipe 13 leading from the pump to the nozzles 9. Typically, the pump will be activated for 15 seconds every 30 minutes, and in other instances it has been found that 1 minutes mist generation every 30 minutes is the optimum.

Under certain circumstances, it is not necessary to use the liquid from tank 1 or 2 in the concentration which is present in the tanks, and therefore the liquid may be diluted. This is arranged by having the control unit 6 to control a further pump 14. This pump may be connected to the general water mains 15 such that by activating pumps 5 and 14 at the same time, a mixture between the liquids created in the tanks 1 or 2 and the general water supply will be mixed and issued as mist 7 in the stable environment.
In order to be able to dose the liquids containing the lactic acid bacteria precisely, a further valve 16 may be installed in the pipe line 17 connecting the tanks 1, 2 to the nozzles 9. This valve 16 may also be operated by the control unit 6. Tests have indicated that a 5 to 20 percent concentration of liquid containing lactic acid bacteria in the mists 7 issuing from the nozzles 9 creates relatively good results.

## Claims

1. Method to reduce odour and dust inside buildings, and in particular animal stables, where the method comprises installing one or more nozzles inside the building, and connecting said nozzle to a pressure source such that a liquid containing water and lactic acid bacteria may be ejected as a mist into said building.

2. Method according to claim 1 wherein the one or more nozzles are arranged in or adjacent the inflow channels of a ventilation system, and the mist thereby is distributed inside the building with the ventilation air.

3. Method according to claim 1 or 2 wherein a slotted floor construction is present inside the building such that the slotted floor allows the water and lactic acid bacteria to flow through the slots and into manure present under the slotted floor.

4. Method according to claim 1 wherein the pressure source is connected to a timer device such that the liquid may be supplied to the nozzles during predetermined time periods and durations.

5. Method according to claim 4 wherein a mist is generated for between 30 seconds and 15 minutes separated by 20 to 90 minutes without mist generation. More preferred, mist is generated between 1 minute to 8 minutes separated by 30 to 45 minutes.

6. Method according to claim 1 wherein the lactic acid bacteria is added to the liquid as a suspension such that the lactic acid bacteria content is between 0,05 % and 30 %, more preferred 10 % to 20 % and most preferred 12 % to 17 % by weight of the liquid.
